## Europäisches Patentamt
## European Patent Office
## Office européen des brevets

(19)

(11) Publication number: **0 080 983**
**A2**

(12) **EUROPEAN PATENT APPLICATION**

(21) Application number: 82850224.5

(22) Date of filing: 05.11.82

(51) Int. Cl.³: **F 02 B 29/04**

(30) Priority: 01.12.81 SE 8107167

(43) Date of publication of application:
08.06.83 Bulletin 83/23

(84) Designated Contracting States:
CH DE FR GB IT LI NL

(71) Applicant: AB VOLVO
Torslanda
S-405 08 Göteborg(SE)

(72) Inventor: Hakansson, Nils Olof
Flintakroken 12
S-44303 Stenkullen(SE)

(74) Representative: Hellbom, Lars Olof et al,
H. Albihns Patentbyra AB Box 7664
S-103 94 Stockholm(SE)

(54) System for supplying combustion air to a supercharged combustion engine with charge air cooling.

(57) A system for controlling the charge air in a turbocharged vehicle diesel engine with a charge air cooler comprises a two-way valve (10) having a position in which it conducts charge air from the compressor (6) via the charge air cooler (8) to the engine (1) cylinders, and a position in which it conducts the charge air past the cooler. The valve is controlled by the charge pressure and the ambient air temperature, so that essentially all of the charge air is led through a shunt pipe (9) past the cooler at a given low engine load (low charge pressure) and low temperature, which makes it possible to reduce particle, gas and noise emissions from the engine. As the ambient air temperature rises, the charge pressure limit at which the valve opens to supply charge air to the engine is lowered, so that the engine is supplied with charge air at a temperature determined by the load and engine speed, and independent of the ambient temperature.

FIG.1

## SYSTEM FOR SUPPLYING COMBUSTION AIR TO A SUPER-CHARGED COMBUSTION ENGINE WITH CHARGE AIR COOLING

The present invention relates to a system for supplying combustion air to the cylinders in a combustion engine for vehicles, comprising a compressor for elevating the pressure of the air supplied to the air intake of the cylinders, a charge air cooler for cooling the charge air from the compressor, and a valve which permits the supply of charge air from the compressor directly to the engine air intake, bypassing the charge air cooler.

Turbo-charged combustion engines with charge air cooling have been known for quite some time. The primary reason for using charge air coolers is to reduce the thermal and mechanical stresses at high power output from the engine as well as to reduce emissions, particularly smoke and $NO_x$. The lower temperature results directly in reduced smoke and $NO_x$ and indirectly presents the possibility of delaying the combustion process (so that the $NO_x$ content can be further reduced) without the thermal stresses at high power output exceeding permissible levels. The lower one can keep the charge air temperature, the higher will be the possible maximum power or reduction of $NO_x$ and smoke emission, but the lowest possible temperature to be used in practice is determined inter alia by the heat requirement to assure good combustion, especially at partial load.

The most common method of cooling the charge air is to use a water/air or an air/air heat exchanger. The former type is normally used with the engine coolant as the cooling medium. The disadvantage of this is that the cooling capacity is limited and that the charge air is cooled at most to a temperature which lies in the vicinity of the coolant temperature. Conversely, however, there is the advantage that at low load - for a short time at least - it is possible to heat the charge air. It is of course possible to reduce the temperature in the charge air cooler by using a separate water coolant system with a lower temperature, as is done in marine engines with access to water cooling, but in vehicle engines this leads to major complications.

In the air/air charge air cooler, the ambient air is normally used directly as the cooling agent and the temperature of the charge air can be lowered to a temperature which is only $20^\circ$ - $30^\circ$C higher than the temperature of the ambient air at full load and very close to this temperature at low load. The advantages of this good cooling at full load are however reduced by the risk of poor combustion with high percentages of non-combusted fuel in the exhaust at low load, especially at low ambient air temperature.

Systems are known which regulate the charge air temperature to an essentially constant temperature regardless of the engine load and speed and regardless of the temperature of the outside air. The known systems can be divided into a type with a thermostat-controlled shunt valve and a type without a shunt valve but with a heat-carrying medium with constant temperature such as a water/air cooler for example. These systems can to be sure prevent at low ambient temperatures excessive cooling of the charge air at low load, but the first-mentioned system has an excessively slow reaction time for rapid changes in load due to the fact that the reaction time is determined and limited by the heat capacity of the thermostat. The latter system has a limited cooling capacity when using the engine coolant, or becomes very complicated when using an extra water coolant system.

The purpose of the present invention is to achieve a system of the type described by way of introduction, which makes it possible to reduce particle, gas and noise emissions from engines by regulating the temperature of the charge air after a predetermined period of time to predetermined values coupled to the engine load and speed independently of the temperature of the ambient air.

This is achieved according to the invention by the valve being a two-way valve controlled by the charge pressure and the temperature of the ambient air, said valve at a given ambient air temperature and at a charge pressure less than a predetermined pressure conducting essentially all the charge air past the charge air cooler, and at said ambient air temperature and at a charge pressure exceeding a predetermined pressure conducting essentially all of the charge air through the charge air cooler, said valve cooperating with a temperature-controlled means which, at temperatures less than said given ambient air temperature, raises said predetermined pressure and, at temperatures exceeding said given temperature, lowers said predetermined pressure.

The system according to the invention provides high temperature in the engine cylinders at low load when the charge pressure is low and all the charge air is shunted past the cooler. At full load there is no reduction of the charge air cooling. The system does not limit the rapidity of the adjustment to load changes, by virtue of the fact that the valve is controlled in the first place by the charge pressure. The temperature-controlled means only needs to respond to the temperature variations in the ambient air, which means that even a long response time is sufficient.

The invention will be described in more detail with reference to examples shown in the accompanying drawings, in which

Fig. 1 shows a schematic drawing of a combustion air system for a turbo-charged engine,

Fig. 2 shows a longitudinal section through a schematically represented shunt valve in the system in Fig. 1, and

Fig. 3 shows a longitudinal section through the shunt valve in a preferred, modified embodiment.

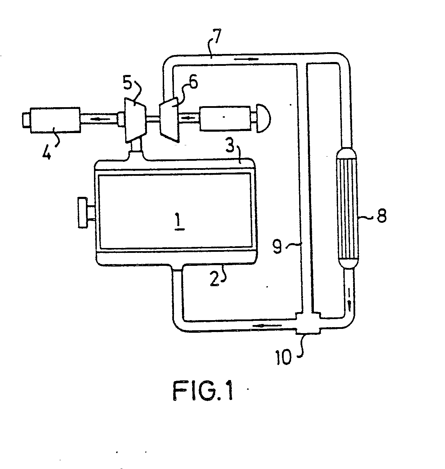

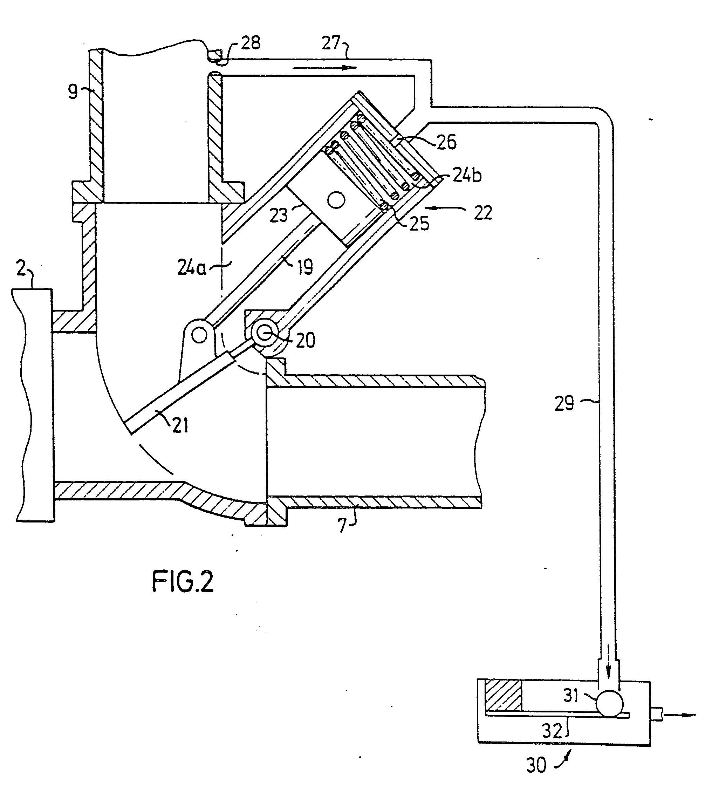

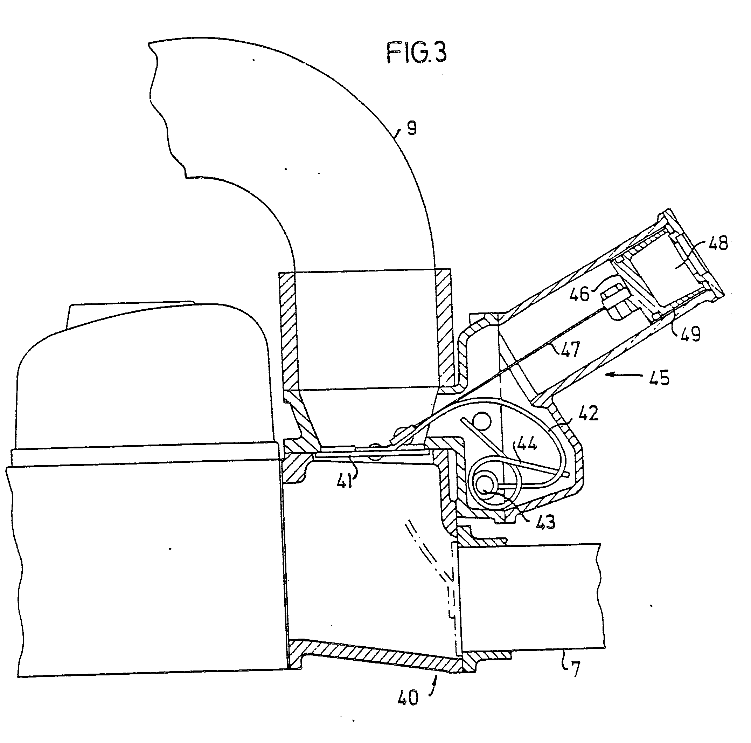

Fig. 1 shows schematically a diesel engine 1 with an intake manifold 2 and an exhaust manifold 3. The latter is connected to an exhaust pipe with a muffler 4 via a turbine 5 which drives a compressor 6. A pipe 7 connects, via a charge air cooler 8, the outlet of the compressor to the intake manifold 2. Parallel to the cooler 8 there is a shunt pipe 9 which in its lower branching piece contains a two-way valve 10 which is shown in more detail in Figs. 2 and 3. Conse-

quently the valve can, depending on the valve setting which is determined by the charge pressure which is dependent on the temperature of the ambient air (as will be described below in connection with Fig. 2), supply the cylinders with cooled air via the cooler 8, uncooled air via the pipe 9, or a mixture of cooled and uncooled charge air via both of the pipes at the same time.

The valve 10, shown in the lower branching piece between the pipe 7 and the pipe 9, comprises a gate 21 hinged about a shaft 20 and which in the intermediate position shown in the figure supplies the engine cylinders with a mixture of cooled and uncooled charge air and which at its both end positions blocks one of the air passages. The position of the gate thus determines in what proportion cooled and uncooled air will be mixed in order to supply the engine with air at a given temperature. The gate 21 is coupled mechanically to a pneumatic setting means 22 in the form of a piston-cylinder device the piston 23 of which is joined to the gate 21 via a piston rod 19 articulated at both ends. The cylinder chamber 24a on the piston rod side is completely open to the shunt pipe 9, and the piston 23 is thus loaded on its underside only by a force dependent on the charge pressure. The cylinder chamber 24b on the opposite side contains a compression spring 25 and communicates via a bore 26, a pipe 27 and a restriction 28 with the shunt pipe 9. Furthermore the chamber 24b communicates via a pipe 29 with an overflow valve 30 having a valve body 31 which is biased towards the closed position by a bimetallic spring 32. Charge air diverted via the overflow valve 30 is led back to the suction side of the compressor through a pipe (not shwon). The piston is thus loaded on the top side by a force which, in addition to the spring force, is dependent on the charge pressure and the temperature of the ambient air, since this temperature determines the opening pressure of the valve 30.

The temperature of the charge air in the shunt pipe 9 is a function of the temperature prior to the compressor 6 and of the pressure rise in the compressor.

At a given ambient air temperature, the temperature of the charge air is determined by the charge pressure, and by determining at what pressure the gate is to begin letting in charge air via the cooler 8 through the pipe 7 it is possible to determine the highest suitable temperature of the air supplied to the engine cylinders. At lower ambient air temperatures, the desired charge air temperature corresponds to a higher charge pressure. The bimetallic spring 32 in the valve 30 is selected and arranged so that the opening pressure of the valve 30 increases with decreasing ambient temperature, which means that it will require a higher charge pressure before the gate will open and let out cooled charge air via the cooler 8. The lower temperature of the ambient air is thus compensated for by higher pressure of the charge air, so that the resulting temperature at which the gate 21 begins to open to let out cooled charge air is kept practically constant independently of the ambient air temperature.

Each gate position between the end positions is regulated in a corresponding manner.

The temperature compensation is achieved in the example described by virtue of the fact that the bending of a bimetallic spring varies nearly linearly with the temperature. By disposing the spring so that its position is kept unchanged at varying temperatures, the closing force will instead vary nearly linearly with the temperature which, because of the design of the valve, will result in the opening pressure increasing linearly with decreasing ambient temperature. Since the temperature at compression in the compressor increases essentially linearly with the pressure over small pressure increases, a lower temperature of the air before the compressor can be compensated for by a nearly proportional pressure rise.

Fig. 3 shows a shunt valve 40 according to the invention in a practical embodiment. The gate 41 is joined here to a curved arm 42 which is rotatably mounted on a shaft 43. The gate is biased towards the position shown with dash-dot lines by a torsion spring 44 and is coupled mechanically to a pneumatic operating means in the form of a piston-cylinder device, the piston 46 of which is joined to the gate via a flexible metal band 47. The restricted communication between the shunt pipe 9 and the cylinder chamber 48 on the top of the piston is formed here by a gap 49 between the piston and the cylinder wall, which is maintained by using a piston without a seal. The cylinder chamber 48 also communicates with an overflow valve (not shown) corresponding to the valve 30 in the example in Fig. 2. The functioning of the shunt valve 40 with the associated overflow valve is analogous to that described in connection with the example in Fig. 2.

In the system according to the invention, the charge air temperature is thus regulated by indidrect measurement of the charge air temperature by measuring the charge air pressure and measuring the temperature of the ambient air, the charge air pressure being used as the control medium to achieve the desired reaction speed to changes in the charge air temperature caused by changes in the engine load. The desired rection speed means here that it can be set at very rapid (as rapid as the charge pressure or the temperature rise, which propagates at the speed of sound) and up to an arbitrarily long reaction time by using restrictions and air volume. The temperature compensation need only be sufficiently rapid to follow changes in the temperature of the outside air.

There has been described above an embodiment in which the shunt valve is placed in a branching piece after the charge air cooler. It can however be placed, with the same function, in a branch before the cooler.

CLAIMS

1. System for supplying combustion air to the cylinders in a combustion engine for vehicles, comprising a compressor for elevating the pressure of the air supplied to the air intake of the cylinders, a charge air cooler for cooling the charge air from the compressor, and a valve which permits the supply of charge air from the compressor directly to the engine air intake, by-passing the charge air cooler, characterized in that the valve (10;40) is a two-way valve controlled by the charge pressure and the temperature of the ambient air, said valve at a given ambient air temperature and at a charge pressure less than a predetermined pressure conducting essentially all the charge air past the charge air cooler (8), and at said ambient air temperature and at a charge pressure exceeding a predetermined pressure conducting essentially all of the charge air through the charge air cooler, said valve cooperating with a temperature-controlled means (30) which, at temperatures less than said given ambient air temperature, raises said predetermined pressure and, at temperatures exceeding said given temperature, lowers said predetermined pressure.

2. System according to Claim 1, characterized in that the valve (10;40) is disposed in one of the branching pieces between a pipe (7) which conducts charge air to the cylinder inlets via the charge air cooler (8) and a shunt pipe (9) connected to said pipe in parallel to the charge air cooler, said valve being disposed, when the pressure is below a certain pressure interval, to conduct essentially all of the charge air via the shunt pipe to the cylinders, when the pressure is within said interval, to conduct the charge air both via the shunt pipe and via the charge air cooler, and when the pressure exceeds said interval, to conduct all the charge air via the charge air cooler, and in that the temperature-controlled means (30) is arranged to raise or lower, respectively, the limits of said pressure interval as the temperature of the ambient air drops or rises, respectively.

3. System according to Claim 2, characterized in that the valve (10;40) has a gate (21;41) operated by a pneumatic operating means (22;45) comprising an air chamber containing a working element (23;46) joined to the gate, and which is loaded by a force dependent on the charge pressure towards a position in which the gate cuts off the connection between the compressor (6) and the cylinder air intake via the shunt pipe (9), and which is loaded in the opposite direction by a spring force and a counter-pressure force regulated by the temperature-controlled means (30).

4. System according to Claim 3, characterized in that the temperature-controlled means is an overflow valve (30) the opening pressure of which varies essentially linearly with the temperature of the ambient air.

5. System according to Claim 4, characterized in that the sealing element (31) of the overflow valve (30) is biased by a bimetallic spring (32) disposed so that the closing force varies essentially linearly with the temperature of the ambient air.

6. System according to any one of Claims 3 - 5, characterized in that the pneumatic operating means (22;45) is a piston-cylinder arrangement the piston (23;46) of which is spring-biased towards a position in which the gate (21;41) cuts off the communication between the compressor (6) and the engine air intake via the charge air cooler (8), the piston cylinder chamber (24a) on the side towards which the spring force acts being in communication with the pressure side of the compressor, while the cylinder chamber (24b;48) on the opposite side communicates both with the pressure side of the compressor via a restriction (28;49) and with the overflow valve (30).

7. System according to Claim 6, characterized in that the gate (41) is hinged and biased towards said position by torsion spring means (44), in that the piston (46) is joined to the gate by means of a flexible metal band (47), and in that the restriction to the pressure side of the compressor is formed by a gap (49) between the piston and the cylinder.

1/3

FIG.1

FIG.2

FIG.3

9

48

46

47

49

45

42

41

44

43

40

7